# EUROPÄISCHE PATENTANMELDUNG

(11) **EP 0 531 651 A2**
(43) Veröffentlichungstag der Anmeldung: **17.03.1993**
(21) Anmeldenummer: 92111551.5
(22) Anmeldetag: 08.07.1992
(51) Int. Cl.: A23G 1/21, A23G 1/22, A23G 3/02

(54) **Klappform, insbesondere für Schokoladenhohlkörper**

(30) Priorität: 12.09.1991 DE 9111349 U; 14.09.1991 DE 4130703
(71) Anmelder: AGATHON, KUNSTSTOFF- UND METALLWARENFABRIK GmbH, D-46238 Bottrop (DE)
(72) Erfinder: Haufe, Vera, Dipl. Ing., W - 4370 Marl (DE); Harbecke, Paul Max, Dr., W-5300 Bonn 2 (DE)
(74) Vertreter: Herrmann-Trentepohl, Werner, Dipl.-Ing.

(57) **Zusammenfassung**

Bei einer Klappform aus zwei Hälften, die jeweils aus einem Rahmen, einer beweglichen Rahmenhälfte und zwei Formeneinsätzen bestehen, von denen wenigstens eine die Außenkontur einer Hälfte eines Formkörpers ausformende Vertiefung aufweist, welche zusammen mit einer im Formeneinsatz der anderen Hälfte ausgebildeten Vertiefung bei zusammengeklappter Form den Formkörper umschließt, wobei die Formeneinsätze auswechselbar in den Rahmen untergebracht sind, ist erfindungsgemäß vorgesehen, daß die Rahmen und die Formeneinsätze (5) aus einem thermoplastischen Kunststoff bestehen und die senkrecht zur Rahmenebene einsetzbaren Formeneinsätze (5), sowie ein Paar der die Formeneinsätze umschließenden Rahmenglieder (30) mit den ihnen zugeordneten Rändern (18, 19) der Formeneinsätze (5) zusammenwirkende und in der Rahmenebene wirksame Federn (31) und Federwiderlager (32) aufweisen, in denen für die zugeordnete Feder ein begrenztes Bewegungsspiel (47, 48) in der Rahmenebene vorgesehen ist, und daß die Formeneinsätze (5) an ihren bei dem anderen Paar von Rahmengliedern zugeordneten Seiten (9, 10) bei zusammengeklappter Form ineinandergreifende Führungselemente (26, 27, 28, 29) aufweisen.

## Beschreibung

Die Erfindung betrifft eine Klappform gemäß dem Oberbegriff des Anspruches 1.

Die Erfindung bezieht sich insbesondere auf die Herstellung von Hohlkörpern aus Schokolade. Solche Hohlkörper lassen sich in mehreren Schritten eines bekannten Verfahrens herstellen. Es besteht z.B. im wesentlichen darin, daß man die für den Hohlkörper erforderliche Masse in die formenden Vertiefungen zweier Formhälften einfüllt und in diesen einen durch Kühlung erstarrten Mantel bildet. Sobald der Schokoladenmantel eine hinreichende Dicke erreicht hat, werden die beiden Formhälften zusammengeklappt. In der Trennebene der Formhälften verbinden sich die Schokoladenmäntel miteinander und bilden dadurch einen in sich geschlossenen Formkörper.

In der erfindungsgemäßen Klappform besteht jede der beiden Formhälften aus einem Rahmen und einem Formeneinsatz. Deswegen ist es möglich, in einem Rahmen Formeneinsätze mit unterschiedlich konturierten Vertiefungen zu verwenden, die dementsprechend die Formung unterschiedlicher Formkörper ermöglichen. Bekanntlich werden aus Schokolade u.a. Figuren und Gegenstände, z.B. Eier geformt.

Bei der erfindungsgemäßen Klappform haben die jeweils einem Klapprahmen zugeordneten auswechselbaren Formeneinsätze vorzugsweise mehrere die Außenkontur einer Hälfte des Formkörpers ausformende Vertiefungen. Diese sind in den im übrigen kongruenten Formeneinsätzen ausgebildet.

Von einer solchen Klappform geht die Erfindung aus. Hierbei bestehen Rahmen und Formeneinsatz aus Metall, weil metallische Werkstoffe ihre Abmessungen trotz der erheblichen Temperaturunterschiede beibehalten, die durch die heiße Schokoladenmasse und deren Abkühlung bedingt sind. Infolgedessen lassen sich die Formeneinsätze in die Rahmen paßgenau einfügen. Der metallische Werkstoff führt jedoch zu erheblichen Gewichten in der Klappform. Die Lärmbelästigungen sind beträchtlich. Bei der beschriebenen Herstellung der Formkörper müssen auch große bewegliche Massen bewältigt werden. Das ist vor allem deshalb ungünstig, weil in den Formmaschinen die Klappformen mechanisch gesteuert werden, um das taktweise Auseinanderklappen und Zusammenklappen der Rahmen und damit der Formeneinsätze zu gewährleisten. Ein weiterer Nachteil besteht in der Schwierigkeit, die Formeneinsätze und gegebenenfalls die Rahmen auszuwechseln. Ein solcher Wechsel ist nicht nur beim Übergang auf andere Formkörper erforderlich, sondern auch bei der häufig auftretenden äußerlichen Verschmutzung der Formeneinsätze mit der flüssigen Schokolade. Deshalb spielt die Handhabbarkeit derartiger Klappformen eine erhebliche Rolle.

Die Erfindung beschreitet demgegenüber einen anderen Weg.

Dieser besteht zunächst in den Merkmalen des Anspruches 1. Weitere Merkmale der Erfindung sind Gegenstand der weiteren Ansprüche.

Gemäß dem Anspruch 1 bestehen die Rahmen und die Formeneinsätze aus einem thermoplastischen Kunststoff. Dieser ermöglicht geringere bewegliche Massen und damit eine günstigere Auswechselbarkeit in der Formmaschine, sobald eine Klappform gereinigt werden muß. Jedoch sind die hierfür infrage kommenden Kunststoffe, z.B. Polypropylen, Polycarbonat und Polyamid gegen Temperaturunterschiede empfindlich, d.h. die Rahmen und die Formeneinsätze ändern bei jedem Temperaturunterschied ihre Hauptabmessungen in der Rahmenebene. Deshalb sieht die Erfindung eine besondere Positionierung der Formeneinsätze in den Rahmen vor. Diese sorgt einerseits für eine Relativbewegung von Rahmen und Formeneinsatz, sobald Temperaturunterschiede und in derem Gefolge Änderungen der Hauptabmessungen eintreten, andererseits aber auch für die Einhaltung der richtigen Überdeckung der beiden Formhälften. Dies geschieht erfindungsgemäß mit Federn, welche in einer Richtung in der Rahmenebene eine nachgiebige Verbindung von Rahmen und Formeneinsatz schaffen und mit deren Gegenlagern, die ein begrenztes Bewegungsspiel in der Rahmenebene erlauben, das senkrecht zur Bewegung der Federn verläuft, wodurch alle Abmessungsänderungen, die in der Rahmenebene auftreten, zwängungsfrei übertragen werden können. Andererseits aber auch dadurch, daß diese Bewegungsmöglichkeiten beim Zusammenklappen der Form gesperrt werden. Diese gewährleisten ineinandergreifende Führungselemente. Sie sorgen dafür, daß in den beiden Formeneinsätzen ausgebildete Vertiefungen exakt übereinander zu liegen kommen, wenn die im wesentlichen rechteckigen Rahmen zusammengeklappt sind. Damit wird erreicht, daß sich an den miteinander verschweißenden Kanten der beiden Hälften der Formkörper keine vorstehenden Grate mehr bilden, was bei relativen Änderungen der beiden Formhälften auftritt. Solche Grate sind unerwünscht, weil sie die herzustellende Form stören und die Formkörper unansehnlich machen.

Die Erfindung hat daher den Vorteil, daß sie die Verwendung von leichten und inerten Werkstoffen ermöglicht, die besser handhabbar sind und nicht mit der Formmasse reagieren. Die neuen Klappformen sind daher leichter zu bewegen und zu reinigen. Dabei vermeidet die Erfindung eine Verschlechterung der Formkörper und eignet sich daher insbesondere für ihr vorzugsweises Anwendungsgebiet der Herstellung von Formkörpern aus Schokolade.

Mit den Merkmalen des Anspruches 2 sorgt man für vorteilhafte, d.h. hinreichend ausgedehnte Montageflächen, auf denen die miteinander zusammenwirkenden Federn und Federwiderlager ausgebildet werden. Bei dieser bevorzugten Ausführungsform der Erfindung werden deshalb Leisten an den Formeneinsätzen vorgesehen, deren Seiten hinreichend groß sind, um die miteinander zusammenwirkenden Teile aufzunehmen. Sie bilden aber mit den Formeneinsätzen eine Baueinheit und bestehen ebenso wie diese aus Kunststoff.

Bei Rahmen und Formeneinsätzen, die in den beiden Hauptdimensionen unterschiedliche Seitenlängen aufweisen, hat sich herausgestellt, daß die durch die Temperaturunterschiede in der Produktion bedingten Änderungen in den Hauptabmessungen der Rahmen und Formeneinsätze unterschiedlich groß sind. Wegen der mechanischen Beanspruchungen, denen die Klappformen im Betrieb in der Regel ausgesetzt sind, müssen außerdem vergleichsweise große Federkräfte aufgebracht werden. Diesen Gesichtspunkten läßt sich auf einfache Weise mit den Merkmalen des Anspruches 3 Rechnung tragen. Hierbei sind die Federn in Hülsen untergebracht. Deshalb lassen sich Druckfedern verwenden, die vergleichsweise große Rückstellkräfte erzeugen und geringe Wege überbrücken. Sie wirken in Richtung der geringeren Rahmen- und Formeinsatzabmessungen. Die Aufnahmen sind so ausgebildet, daß ihr Bewegungsspiel größer als die Federwege ist und deshalb parallel zu den längeren Abmessungen orientiert ist. Diese Ausführungsform der Erfindung benutzt Kugeln. Als Aufnahme für eine Kugel dient eine Kugelpfanne. Das in dieser vorgesehene Bewegungsspiel hat den Vorteil, daß es enge Passungen zwischen Feder und Hülse bzw. Kugel erlaubt.

Zwar kann man auch die mit der Feder zusammenwirkenden Teile - Hülse und Kugel - aus Kunststoff herstellen. Es hat sich jedoch herausgestellt, daß hierdurch und mit einer noch vertretbaren Anzahl von Federn je Formhälfte die erheblichen Beanspruchungen und Gewichte der Formeneinsätze und der Rahmen nur schwer zuverlässig aufgenommen und übertragen werden können. Deswegen werden die Federn und die mit ihnen zusammenwirkenden Baugruppen vorzugsweise aus Metall hergestellt. Dann muß dafür gesorgt werden, daß die unterschiedlichen Werkstoffe sich ausreichend fest miteinander verbinden können. Dieses Problem wird mit den Ansprüchen 4 und 5 gelöst. Bei diesen Ausführungsformen der Erfindung sind die Hülsen von eine Seite her in die Rahmenglieder eingedreht, die zuvor mit entsprechenden Aussparungen versehen worden sind. Die Hülsen werden dann mit einer von der anderen Seite aufgedrehten Kontermutter mit den Rahmengliedern verspannt. Auch die Aufnahmen sind bei der Ausführungsform nach Anspruch 5 mit den Leisten verspannt, die zuvor eine glattzylindrische Aussparung erhalten, in die die Spreizhülse eingreift und das Federlager zwischen der im Durchmesser größeren Kugelpfanne und dem Endflansch mit der Leiste verspannt.

Die Ausbildung des Bewegungsspieles in der von der Kugelpfanne gebildeten Aufnahme läßt sich mit einer im Grundriß ellipsenförmigen Kugelpfanne verwirklichen, was in der Ausführungsform nach Anspruch 6 vorgesehen ist. Der ellipsenförmige Grundriß hat den Vorteil, daß er ein senkrecht zur Rahmenebene auftretendes Spiel verhindert und deshalb nur eine Relativbewegung in der Rahmenebene zuläßt.

Die für die Qualität der herzustellenden Formkörper wesentliche Ausschaltung des Bewegungsspiels der Formeneinsätze im zusammengeklappten Zustand der Form läßt sich auf verschiedene Weise erreichen. Zweckmäßig ist indessen die Ausführungsform nach Anspruch 7. Hierbei werden beim Zusammenklappen die Zapfen in die Ösen eingeführt. Die beweglichen Formhälften sind dann in allen Richtungen der Rahmenebene im zusammengeklappten Zustand der Form fixiert, jedoch lassen sich die beiden Stellungen der Klappform - aufgeklappt und zusammengeklappt - mit einer derartigen Führung problemlos einnehmen.

Grundsätzlich lassen sich Schokoladenhohlkörper auf unterschiedliche Weise mit dem eingangs beschriebenen grundsätzlichen Verfahren herstellen. Die Erfindung eignet sich insbesondere für solche Formmaschinen von Schokoladenhohlkörpern, bei denen der Übertritt des flüssigen Schokoladenkerns in die unten liegende Formhälfte durch die Schwerkraft bewirkt wird. Solche Formmaschinen sind in der Schokoladenindustrie verbreitet und weisen in der Regel ein bewegliches Förderorgan auf, in dem die beiden durch ein Scharnier miteinander verbundenen Rahmen der Formhälften beweglich aufgehängt sind. Diese Anwendung der Erfindung ist Gegenstand des Anspruches 8.

Die Klappform gemäß der Erfindung ist vorzugsweise mit einem Verschluß zum lösbaren Versperren der beiden Hälften versehen, der sich grundsätzlich zum Versperren zweier eben aufeinanderliegender Teile eignet und daher einem eigenen Oberbegriff folgt, welcher den Gegenstand des Anspruches 9 bildet. Solche Klappformen lassen sich nicht nur in der eingangs beschriebenen Weise verwenden, indem man mit der flüssigen Masse in einer der Formhälften die Formhöhlung ausfüllt, die Form schließt und dabei die Formhälften versperrt. Sie ermöglichen auch ein anderes Verfahren, bei dem die von außen nach innen erstarrenden Masse durch Drehen der geschlossenen Form ein flüssiger Rest in die zwei Formhälfte verbracht wird und in dieser unter Bildung der zweiten Formkörperhälfte vollständig erstarrt. Die Formhälften werden danach voneinander getrennt und der oder die fertigen Hohlkörper werden aus den Formhöhlungen entnommen.

Insbesondere bei diesen und bei anderen Verwendungen kommt es darauf an, daß die geschlossenen Formhälften, sobald sie planeben aufeinanderliegen, zuverlässig versperrt sind, um ein unbeabsichtigtes Öffnen der Formhälften zu verhindern und auch Spalte zwischen den Formhälften auszuschließen, welche zu sichtbaren Nähten an den Formkörpern führen würden. Das Öffnen der Formhälften soll jedoch bereits mit geringen Kräften gewährleistet sein, um den Produktionsgang nicht zu stören und z.B. Beanspruchungen zu verhindern, welche u.a. die fertigen Hohlkörper verformen könnten.

In der Lebensmittelindustrie verwenden die beschriebenen und bekannten Formen bislang magnetische Verschlüsse. Sie lassen sich beispielsweise dadurch öffnen, daß ein Messer in der Trennebene der Form zwischen die beiden Formhälften eingeführt wird, das durch Drehen der Messerklinge die magnetischen Kräfte überwindet und so die Form öffnet. Es ist jedoch schwierig, die für den Zusammenhalt erforderlichen Kräfte mit Magneten aufzubringen, weil dafür nur Permanentmagnete zur Verfügung stehen. Sobald größere Kräfte erzeugt werden sollen, wird es zunehmend schwierig, die hierfür erforderlichen Massen der Permanentmagnete in der Form unterzubringen. Das muß nämlich in Aussparungen in beiden Formhälften erfolgen, die das Material örtlich schwächen. Die Erzeugung ausreichender Kräfte, welche die Formhälften auf diese Weise magnetisch zusammenhalten, ist auch nicht unproblematisch, weil die magnetischen Kräfte mit dem Quadrat der Entfernung abnehmen und deshalb eine exakte Ausrichtung der Teile und deren absolute Verschmutzungsfreiheit gewährleistet werden muß. Das läßt sich in der Praxis fertigungstechnisch schwer erreichen und ist zudem im Betrieb durch die Anwesenheit flüssiger Masse problematisch. Diese Schwierigkeiten wachsen beträchtlich, wenn leichte Teile mit den bekannten Verschlüssen versehen sind und metallische Werkstoffe durch Kunststoffe, insbesondere Thermoplaste, u.a. auch aus hygienischen Gründen, wie erfindungsgemäß vorgeschlagen, verwendet werden.

Die Erfindung sieht für die vorstehend geschilderten speziellen Zwecke einen anderen Weg vor, dessen Grundgedanke im Anspruch 9 wiedergegeben ist, der aber auch vorteilhaft auf andere Verschlüsse anwendbar ist.

Gemäß der Erfindung werden die Schließkräfte, welche die Teile zusammenhalten, mechanisch erzeugt. Deren Größe hängt daher nicht mehr von der Masse der im Verschluß miteinander zusammenwirkenden Bauteile ab, welche bei aufeinanderliegenden Teilen wirksam werden. Dazu dient erfindungsgemäß ein Zylinderschloß, dessen Riegel und Zuhaltung zwar eine gewisse axiale Ausdehnung erfordern, deren radiale Abmessungen jedoch gering gehalten werden können, wodurch sich auch bei größeren Kräften kleine Aussparungen und damit auch nur geringe Schwächungen des Werkstoffes der Teile ergeben. Dies hat insbesondere bei den Klappformen aus einem leichten Werkstoff wesentliche Vorteile. Die Mechanik solcher Verschlüsse wird außerdem nicht oder nur geringfügig in ihrer Funktion durch flüssige Formmassen beeinträchtigt, die mit ihren Teilen in Kontakt gerät.

Da man die Teile, sobald sie aufeinanderliegen, durch Treiben der federnden Stifte ihrer Verschlüsse miteinander versperrt, ist die Handhabung außerordentlich erleichtert. Denn die Verschlüsse lassen sich wie das Eintreiben von Nägeln versperren. Andererseits führt der formschlüssige Eingriff der Stifte mit der Zuhaltung beim Trennen der Teile dazu, daß nur geringfügige Kräfte aufgebracht zu werden brauchen, weil die Federn in den Verschlüssen die Rückführung der Stifte erleichtern und von selbst dafür sorgen, daß die Stifte in ihre Ausgangsstellung zurückkehren, sobald deren formschlüssiger Eingriff mit der Zuhaltung aufgehoben ist.

Eine praktische Ausführungsform des erfindungsgemäßen Verschlusses ist im Anspruch 10 wiedergegeben. Sie erleichtert wesentlich die Bearbeitung der im Verschluß miteinander zu versperrenden Teile, weil diese rotationssymmetrisch ausgebildet werden können.

Bei derartigen Ausführungsformen der Erfindung empfiehlt es sich, die Merkmale des Anspruches 11 zu verwirklichen. Auch hierbei behält der Stift seine rotationssymmetrische Form, wobei man die Feder mit einer für den jeweiligen Anwendungsfall optimalen Federcharakteristik verwirklichen kann.

Die Montage des erfindungsgemäßen Verschlusses ist vergleichsweise einfach, wenn man die Merkmale des Anspruches 12 verwirklicht. Hierbei genügt eine Bohrung in dem betreffenden Teil, das man ganz durchbohrt, wobei man lediglich die Bohrungen abstuft, um die Buchse funktionsgerecht einzusetzen.

Die Merkmale des Anspruches 13 dienen ebenfalls zur Erleichterung der Montage des Verschlusses. Auch hierbei kann man eine das betreffende Teil durchsetzende Bohrung benutzen, die entsprechend abgestuft ist, um die Feder und ihre Abstützungen einbringen zu können.

Es ist ferner ein wesentlicher Vorteil der Erfindung, daß man wichtige Baugruppen des erfindungsgemäßen Verschlusses nicht mehr in Metall, sondern in Kunststoff ausführen kann. Eine Möglichkeit hierfür ist im Anspruch 14 wiedergegeben.

Zum besseren Verständnis wird die Erfindung im folgenden anhand der Figuren in der Zeichnung näher erläutert; es zeigen
- Fig. 1: im vergleichsweise großen Maßstab und in abgebrochener Darstellung, sowie teilweise im Schnitt eine Feder und eine Aufnahme gemäß der Erfindung,
- Fig. 2: eine Seitenansicht des Gegenstandes der Fig. 1,

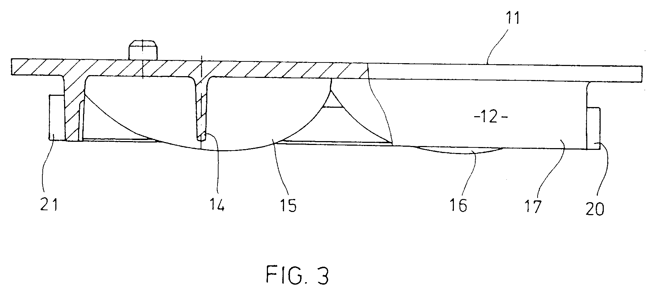

- Fig. 3: eine teilweise im Querschnitt gehaltene Seitenansicht eines Formeneinsatzes,
- Fig. 4: eine unterbrochene Draufsicht auf den Gegenstand der Fig. 3,
- Fig. 5: als Anwendungsbeispiel des Verschlusses auf eine Formhälfte einer Form zur Herstellung von Hohlkörpern aus Schokolade in der Fig. 4 entsprechender Darstellung,
- Fig. 6: einen Schnitt längs der Linie II-II der Fig. 5,
- Fig. 7: einen Schnitt längs der Linie III-III der Fig. 5 und
- Fig. 8: den Verschluß gemäß der Erfindung in vergrößerter und teilweise im Längsschnitt gehaltener Darstellung.

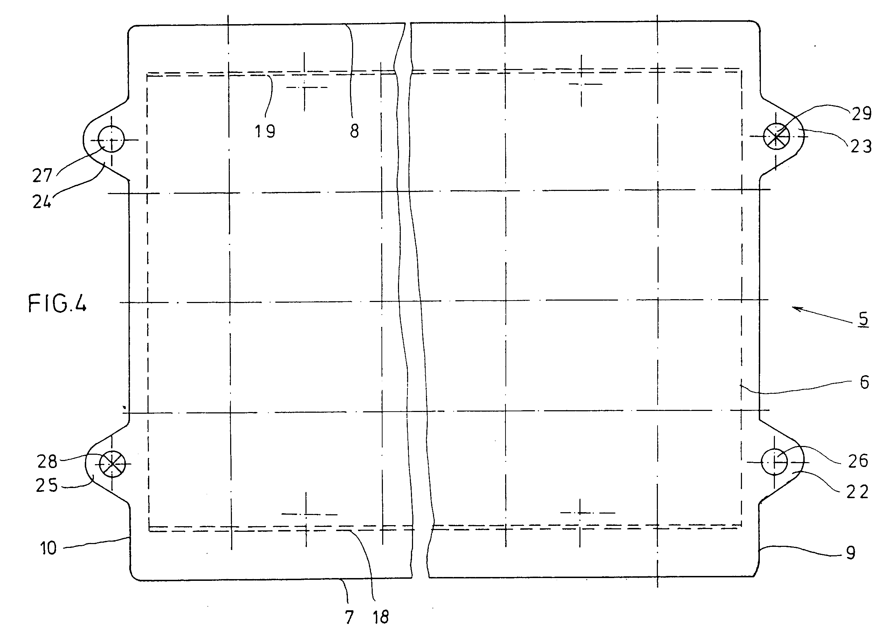

In den Zeichnungen ist die Erfindung in ihrer Anwendung auf Formmaschinen von Schokoladenhohlkörpern dargestellt. Aus der Darstellung der Fig. 4 ergibt sich, daß die im übrigen nicht wiedergegebenen formenden Vertiefungen in der in der Zeichenebene liegenden Fläche der Formeneinsätze 5 angeordnet sind. Werden mit diesem Formeneinsatz 5 Schokoladenhohlkörper hergestellt, so sind diese in ihrer senkrechten Mittelebene unterteilt, so daß jede ausformende Vertiefung eine Hälfte der Formkörper enthält, welche zusammen mit einer in einem weiteren Formeneinsatz ausgebildeten kongruenten, gleich großen Vertiefung bei zusammengeklappter Form den Formkörper umschließt. In der Fig. 4 sind aus Gründen der Vereinfachung die Konturen der ausformenden Vertiefungen weggelassen. Der Formeneinsatz ist allgemein rechteckig. Er weist dementsprechend zwei längere, parallele Seiten 7, 8 auf, die senkrecht zu den ebenfalls einander parallelen kürzeren Seiten 9, 10 verlaufen. Der Formeneinsatz ist eintelig mit einem oberen ebenen Plattenabschnitt 11 und einem umlaufenden unteren Rand 12. Zur Verbesserung seiner Formfestigkeit dienen Rippensegmente 14, welche die die Vertiefungen umschließenden Schalen 15, 16 miteinander verbinden. Der den Formeneinsatz 5 aufnehmende Rahmen ist nicht dargestellt. Er weist jedoch Rahmenglieder auf, welche winkelsteif miteinander verbunden sind und vorzugsweise ebenfalls eine Baueinheit bilden. Diese Rahmenglieder weisen ihrerseits Flächen auf, die im wesentlichen der Fläche 17 des umlaufenden Randes entsprechen. Bei eingesetztem Rahmen stehen sich diese Flächen und die Flächen 17 des Randes 12 gegenüber.

An den kürzeren Seiten 9, 10 stehen im Grundriß etwa trapezförmige Ohren 24, 25 vor. Die Ohren 22 und 24 bilden Ösen, deren zylindrische Aussparungen mit 26 und 27 bezeichnet sind. Die Ohren 23 und 25 tragen dagegen Zapfen 28, 29, die senkrecht zur Zeichenebene der Fig. 4 vorstehen. Die zusammenwirkenden Formeneinsätze 5 sind kongruent, werden aber derart umgekehrt in die ihnen zugeordneten Rahmen eingesetzt, daß den Ösen 22 und 24 Zapfen gegenüberstehen, die den Zapfen 28 und 29 entsprechen, denen Ösen gegenüberstehen. Die Zapfen und Ösen bilden bei zusammengeklappter Form ineinandergreifende Führungselemente 28 und 29 bzw 26 und 27. Sie sorgen dafür, daß die Konturen der Vertiefungen in beiden Formeneinsätzen exakt übereinanderstehen, sobald die beiden Formhälften zusammengeklappt sind.

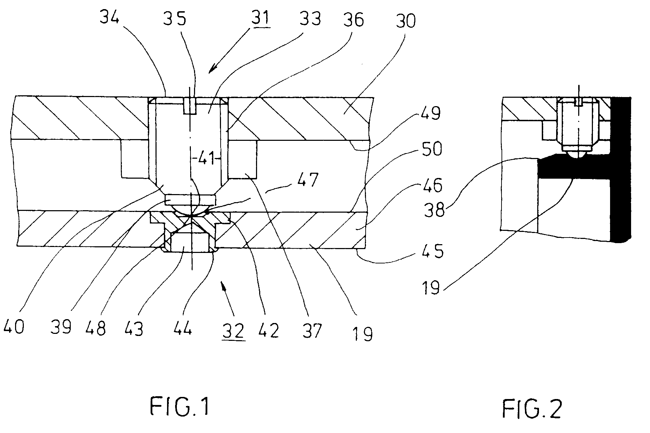

Gemäß der Darstellung der Fig. 1 tragen die längeren Rahmenglieder, wie am Beispiel des Rahmengliedes 30 in Fig. 1 gezeigt, Federn, welche allgemein mit 31 bezeichnet sind. Diese Federn wirken mit Federwiderlagern 32 zusammen. Die Federwiderlager sind, wie am Beispiel des Randabschnittes 19 dargestellt, in den beiden Rändern 18 und 19 befestigt. Sie wirken in der Ebene des Rahmens, die parallel zur Ebene der Platte 11 verläuft.

Gemäß der dargestellten Ausführungsform ist die nicht sichtbare Feder 31 in einer Hülse 33 untergebracht und auf einer Endplatte 34 abgestützt, welche die Hülse 33 an einer Seite verschließt und mit einem Schlitz 35 versehen ist, in den ein Schraubendreher eingesetzt werden kann. Die Hülse weist ein Außengewinde 36 auf, mit dem sie in eine zylindrische Aussparung eingedreht werden kann, welche das Rahmenglied 30 durchdringt. Der nach innen vorstehende Teil der Hülse 33 dient zum Aufschrauben einer Mutter 37, welche die Hülse 33 mit ihrem Außengewinde 36 in der Aussparung des Rahmengliedes verspannt.

Die Feder wirkt auf eine Kugel 38, die auf einem Flansch 39 des kegelstumpfförmigen anderen Endes 40 der Hülse innen abgestützt ist und dementsprechend mit einer Kalotte 41 nach außen vorsteht.

Das Federwiderlager vereinigt in einem Stück eine Platte 42 mit einer Spreizhülse 43, deren freies Ende einen Kragen 44 aufweist, welcher sich auf der Innenseite 45 der Leiste 46 abstützt, die parallel zu der längeren Seite 8 in dem Formeneinsatz 5 verläuft. Für die Kugelkalotte ist eine Pfanne vorgesehen, die das bei 47 und 48 gezeigte Bewegungsspiel in der Pfanne ausnutzt. Das Bewegungsspiel verläuft senkrecht in der Zeichenebene der Fig. 1 zur Richtung der Federbewegung und der Kugelkalotte 41. Dementsprechend kann eine Relativbewegung durch Formänderung im Gefolge von Temperaturänderungen in beiden Hauptrichtungen des Rahmens und des Formeneinsatzes aufgenommen werden. Demgegenüber sitzt das Federwiderlager infolge seines sich auf der Seite 45 abstützenden Kragens 44 und der Platte 42 fest in der Leiste 46. Die Federn und die Federwiderlager wirken senkrecht zu den einander zugekehrten Seiten 49 und 50 der Rahmenglieder 30 und der Leisten 46 zusammen.

Während in der Zeichenebene der Fig. 2 kein Bewegungsspiegel dargestellt ist, so daß sich trotz der Formänderungen der Formeneinsatz 5 nicht aus dem Formrahmen herausbewegen kann, liegt das Bewegungsspiel in der dazu senkrechten Rahmenebene. Im Grundriß ist daher die Kugelpfanne ellipsenförmig, wobei das Bewegungsspiel 47, 48 die längere Seite der Ellipse ausnutzt.

Bei den üblichen Formmaschinen mit dem eingangs beschriebenen Förderorgan ist es ausreichend, wenn im Anschluß an die kürzeren Seiten 9, 10 auf jedem Rand 18, 19 ein Paar von Federn und Federwiderlagern 31, 32 vorgesehen wird, wobei etwa in der Mitt der Leisten 18, 19 noch je eine diametrale Anordnung aus Feder und Federwiderlager vorgesehen sein kann.

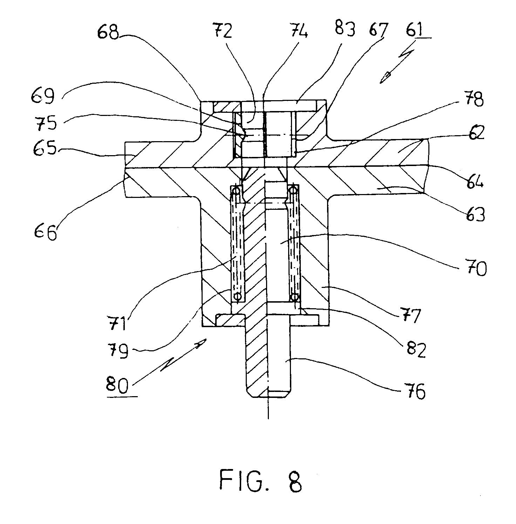

Unter Bezugnahme auf die Darstellung der Fig. 8 dient der dort dargestellte und allgemein mit 61 bezeichnete Verschluß zum lösbaren Versperren zweier Teile 62, 63. Diese liegen in einer Trennebene 64 mit ebenen Flächen 65, 66 planeben aufeinander.

Es handelt sich um ein Zylinderschloß, dessen Schloßzylinder mit einer Aussparung 67 im Teil 62 verwirklicht ist. Diese Aussparung durchsetzt einen zylindrischen Vorsprung 68, welcher mit dem Teil 62 eine Baueinheit bildet. Sie mündet in der Trennebene 64. In der Aussparung 67 sitzt eine elastische Zuhaltung, die mit einer Buchse 69 verwirklicht ist. Als Schloßriegel dient ein allgemein zylindrischer Stift 70. Er ist in die Offenstellung, welche rechts in der Darstellung der Fig. 8 wiedergegeben ist, mit einer Wendelfeder 71 vorgespannt. Sein in den Schloßzylinder einführbares Ende, das links in Fig. 8 wiedergegeben und mit 72 bezeichnet ist, wirkt mit der Zuhaltung, d.h. mit der Buchse 69 zusammen. Dazu dient eine Ringnut 74, welche mit einem entsprechend geformten umlaufenden Innenwulst 75 der Buchse 69 zusammenwirkt.

In entsperrtem Zustand des Verschlusses 61 steht ein zylindrisches Ende 76 des den Schloßriegel bildenden federnden Stiftes 70 nach außen aus einem Vorsprung 77 des Teiles 63 vor, wobei der Vorsprung 77 ebenso wie der Vorsprung 68 des Teiles 62 mit dem Teil 63 eine Baueinheit bildet.

Das Ende 76 dient zum Treiben des Stiftes 70 gegen die Kraft der Feder 71 bis zum formschlüssigen Eingriff mit der Zuhaltung 69. Werden die Teile 62, 63 z.B. durch Einsetzen eines Werkzeuges in der Trennebene 64 voneinander getrennt, so verformt sich die Buchse 69 infolge ihrer Eigenelastizität und eines Ringspaltes 78 zwischen der Buchse und der sie aufnehmenden zylindrischen Aussparungen 78 nach außen. Dadurch kommt die ringförmige Innenwulst 75 aus der Ringnut 74 des Stiftendes 72 frei und die Feder 71 führt den Stift 70 in seine aus der rechten Darstellung der Fig. 8 ersichtliche Stellung zurück, in der das Schloß entsperrt ist. Die als Wendel ausgebildete Feder 71 ist außen zylindrisch und in eine zylindrische Aussparung 79 eingesetzt, welche den mittleren Teil einer Ausnehmung 80 bildet. Sie stützt sich auf einem Ringflansch 81 des Stiftes ab, der seinerseits in der Offenstellung des Verschlusses auf einer Scheibe 82 abgestützt ist.

Auch die die Zuhaltung bildende elastische Buchse 69 ist in einer Aussparung 78 untergebracht, welche abgestuft ist. Ihr oberes, im Durchmesser vergrößertes Ende dient zur Aufnahme einer Scheibe 83', welche unter die Trennebene 64 versenkt ist.

Für die Unterbringung des Riegels und der mit ihm zusammenwirkenden Teile ist der Vorsprung 77 vorgesehen, der einen zylindrischen Zapfen bildet und in seiner Symmetrieachse die Aussparung 80 trägt. Mit Ausnahme des Stiftes 70 und der Feder 71 können alle weiteren Teile des Schlosses aus Kunststoff bestehen.

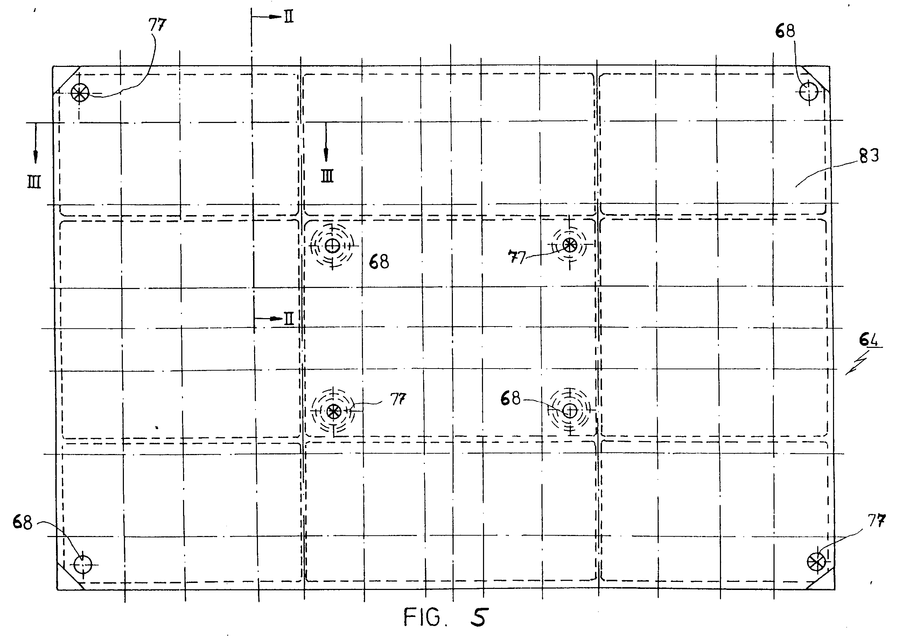

Gemäß der Darstellung der Fig. 5 liegt die Trennebene 64 in der Zeichenebene. Wie sich aus der Darstellung ergibt, sind die Vorsprünge 77 jeweils in den gegenüberliegenden Ecken eines Rechteckes angeordnet, deren beide anderen, sich gegenüberliegenden Ecken die Vorsprünge 68 aufweisen. Die beschriebenen Vorsprünge liegen hinter der Zeichenebene, so daß die nicht dargestellten formenden Höhlungen der Formhälfte 64 in der Zeichenebene münden. Die dargestellte und allgemein mit 83 bezeichnete Formhälfte wirkt mit einer Formhälfte zusammen, welche die komplementären Teile zu den Vorsprüngen 68 und 77 in entsprechender Anordnung aufweist, so daß die in der einen Formhälfte untergebrachten Baugruppen des Verschlusses mit den in der anderen Formhälfte verwirklichten Baugruppen ausgefluchtet sind.

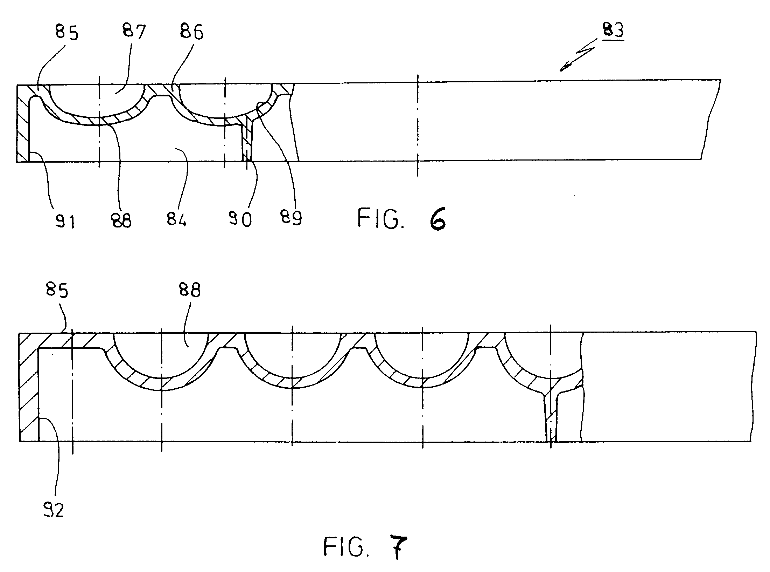

Aus der Darstellung der Fig. 6 und 7 ergibt sich, daß die Formhälfte 83 ebenso wie die mit ihr zusammenwirkende, nicht dargestellte Formhälfte mit geringem Werkstoffaufwand und sehr leicht ausgeführt ist. Sie hat einen umlaufenden Rand 84 und eine in der Trennebene liegende Oberseite 85 in Form einer Platte 86, die zur Bildung von formenden Höhlungen 87 bzw. 88 aus der Plattenebene zwischen die umlaufenden Ränder 84 eingewölbte Abschnitte 88 aufweist. In bestimmten Abständen sind einzelne Wölbungen, wie bei 89 dargestellt, mit Rippen 90 verstärkt, welche parallel zu den ihnen zugeordneten Rändern 91 bzw. 92 verlaufen.

Die Formhälften bestehen aus Kunststoff, die im Spritzgußverfahren hergestellt sind. Sie sind wesentlich leichter als metallische Formen und im übrigen gegen chemische Einflüsse inert. Der beschriebene Verschluß 61 ist für derartige Formen geeignet, weil er sich in Vorsprüngen unterbringen läßt, die mit den Formhälften 83 einteilig ausgebildet werden können.

## Patentansprüche

1. Klappform aus zwei Hälften, die jeweils aus einem Rahmen, einer beweglichen Rahmenhälfte und zwei Formeneinsätzen bestehen, von denen wenigstens eine die Außenkontur einer Hälfte eines Formkörpers ausformende Vertiefung aufweist, welche zusammen mit einer im Formeneinsatz der anderen Hälfte ausgebildeten Vertiefung bei zusammengeklappter Form den Formkörper umschließt, wobei die Formeneinsätze auswechselbar in den Rahmen untergebracht sind, dadurch gekennzeichnet, daß die Rahmen und die Formeneinsätze (5) aus einem thermoplastischen Kunststoff bestehen und die senkrecht zur Rahmenebene einsetzbaren Formeneinsätze (5), sowie ein Paar der die Formeneinsätze umschließenden Rahmenglieder (30) mit den ihnen zugeordneten Rändern (18, 19) der Formeneinsätze (5) zusammenwirkende und in der Rahmenebene wirksame Federn (31) und Federwiderlager (32) aufweisen, in denen für die zugeordnete Feder ein begrenztes Bewegungsspiel (47, 48) in der Rahmenebene vorgesehen ist, und daß die Formeneinsätze (5) an ihren dem anderen Paar von Rahmengliedern zugeordneten Seiten (9, 10) bei zusammengeklappter Form ineinandergreifende Führungselemente (26, 27, 28, 29) aufweisen.

2. Klappform nach Anspruch 1, dadurch gekennzeichnet, daß die Ränder (18, 19) der Formeneinsätze (5) von Leisten (46) gebildet werden, die mit dem Formeneinsatz (5) eine Baueinheit bilden und in der Rahmenebene angeordnet sind, wobei die einander zugekehrten Seiten (49, 50) der Rahmenglieder (30) und Leisten (46) die Federwiderlager (32) tragen.

3. Klappform nach einem der Ansprüche 1 oder 2, dadurch gekennzeichnet, daß die Federn (31) in Hülsen (41) untergebracht sind, die in den längeren Rahmengliedern (30) des im wesentlichen rechteckigen Rahmens befestigt sind und auf eine Kugel (38) wirken, für die in den Federwiderlagern (32), die an den den Rahmengliedern (30) parallelen Leisten (18, 19) der ebenfalls im wesentlichen rechteckigen Formeneinsätze angebracht sind, eine Kugelpfanne vorgesehen ist, wobei die Führungselemente (26, 27) an den kürzeren Seiten (9, 10) der Formeneinsätze (5) angeordnet sind.

4. Klappform nach einem der Ansprüche 1 bis 3, dadurch gekennzeichnet, daß die Hülsen (41) von der Außenseite mit einem Außengewinde (36) eingedreht und von der Innenseite mit einer aufgedrehten Kontermutter (37) gehalten sind.

5. Klappform nach einem der Ansprüche 1 bis 4, dadurch gekennzeichnet, daß das Federwiderlager (32) in eine glatt zylindrische Aussparung eingesetzt und mit einer Spreizhülse (43) versehen ist, welche an die mit ihr einteilige Kugelpfanne (42) anschließt und sich mit einem Endflansch (44) abstützt, während die Kugelpfanne (42) das Widerlager der Abstützung bildet.

6. Klappform nach einem der Ansprüche 1 bis 5, dadurch gekennzeichnet, daß das Bewegungsspiel (47, 48) durch die längs der längeren Achse der im Grundriß ellipsenförmigen Kugelpfanne (42) gegeben ist.

7. Klappform nach einem der Ansprüche 1 bis 6, dadurch gekennzeichnet, daß die Führungselemente aus Zapfen (28, 29) und mit diesen zusammenwirkenden Ösenaussparungen (26, 27) bestehen, wobei an jeder Seite die Zapfen (28, 29) und die Ösenaussparungen (26, 27) wechselseitig angeordnet sind.

8. Klappform nach einem der Ansprüche 1 bis 7, dadurch gekennzeichnet, daß sie für Formmaschinen von Schokoladenhohlkörpern vorgesehen ist, wobei die Formmaschine ein bewegliches Förderorgan aufweist, in dem die Formrahmen mit diametralen Lagern aufgehängt sind, die Formhälften in der Offenstellung der Form in deren zusammengeklappte Stellung vorgespannt sind und die Formmasse aus einem oberen Formeneinsatz (5) in einen unteren Formeneinsatz übertritt.

9. Verschluß, insbesondere für Klappformen nach Anspruch 1 und einem oder mehreren der folgenden Ansprüche 2 bis 8 mit einem oder mehreren Verschlüssen zum lösbaren Versperren zweier eben aufeinanderliegender Teile, vorzugsweise der beiden Formhälften, die mechanisch unter Entsperrung der Verschlüsse getrennt werden, gekennzeichnet durch ein Zylinderschloß, dessen Schloßzylinder mit einer in der Trennebene (64) mündenden Aussparung (67) des einen Teiles (62) verwirklicht ist, wobei in der Aussparung (67) eine elastische Zuhaltung (69) axial festgelegt ist, während der Schloßriegel als axial federnder Stift (70) ausgebildet ist, der an seinem in den Schloßzylinder einführbaren Ende (72) eine mit der Zuhaltung zusammenwirkende Ausnehmung (74) aufweist und am gegenüberliegenden Ende (76) vorsteht, das zum Treiben gegen die Kraft seiner Feder (71) bis zum formschlüssigen Eingriff mit der Zuhaltung (69) dient und beim Trennen der Teile (62, 63) unter Verformung der Zuhaltung (69) zur Freigabe und Rückführung des Stiftes (70) durch die Kraft der Feder (71) in seine Ausgangsstellung zurückkehrt.

10. Verschluß nach Anspruch 9, dadurch gekennzeichnet, daß die elastische Zuhaltung aus einer hohlzylindrischen Buchse (69) besteht, welche einen ringförmigen Innenwulst (75) aufweist, der mit einer Ringnut (74) des Stiftendes (72) zusammenwirkt.

11. Verschluß nach einem der Ansprüche 9 oder 10, dadurch gekennzeichnet, daß die Feder (71) als Wendelfeder ausgebildet ist, die in eine zylindrische Aussparung (80) eingesetzt ist und sich auf einem Ringflansch (82) des Stiftes (70) abstützt.

12. Verschluß nach einem der Ansprüche 9 bis 11, dadurch gekennzeichnet, daß die elastische Buchse (69) der Zuhaltung sich auf einer Scheibe (83) abstützt, die in ein im Durchmesser vergrößertes Ende der den Schloßzylinder bildenden Aussparung (67) eingesetzt ist, unter deren Trennebene (64) die Scheibe (83') versenkt ist.

13. Verschluß nach einem der Ansprüche 9 bis 12, dadurch gekennzeichnet, daß für die Unterbringung des Riegels (70) und der mit ihm zusammenwirkenden Teile ein Zapfen (77) vorgesehen ist, wobei die Aussparung (80) mit einer Ringscheibe (82) verschlossen ist, auf der sich der Ringflansch (81) des Stiftes (70) abstützt.

14. Verschluß nach einem der Ansprüche 9 bis 13, dadurch gekennzeichnet, daß mit Ausnahme des Stiftes (70) und der Feder (71) alle Teile des Schlosses aus Kunststoff bestehen.

15. Verschluß nach einem der Ansprüche 9 bis 14, gekennzeichnet durch seine Verwendung zum Ver- und Entsperren einer Form für Hohlkörper aus einer eßbaren Masse aus zwei Formhälften (83) durch Verwirklichung seiner Aussparungen (67, 82) der beiden Formhälften (83), die aus Kunststoff bestehen, wobei mehrere Verschlüsse (68, 77) vorgesehen sind, deren Vorsprünge (68, 80) mit den Formhälften eine Baueinheit bilden und bei geschlossene Form außen vorstehen.

16. Verschluß nach einem der Ansprüche 9 bis 15, dadurch gekennzeichnet, daß die Vorsprünge (68, 80) des Schloßzylinders und des Schloßriegels der Verschlüsse abwechselnd in der einen oder der anderen Formhälfte (83) verwirklicht sind.
